# EUROPEAN PATENT SPECIFICATION

(11) **EP 2 658 634 B1**
(45) Date of publication and mention of the grant of the patent: **23.03.2016**
(21) Application number: 11817430.9
(22) Date of filing: 28.12.2011
(51) Int. Cl.: B01D 53/26, B01D 53/28, A23B 7/022, A23L 3/42, C10M 133/08

(54) **DEHYDRATION PROCESS THAT EMPLOYS AN IONIC LIQUID CHOLINE SALT**
DEHYDRIERUNGSVERFAHREN UNTER VERWENDUNG EINES CHOLINSALZES AUS EINER IONISCHEN FLÜSSIGKEIT
PROCÉDÉ DE DÉSHYDRATATION QUI UTILISE UN SEL DE CHOLINE LIQUIDE IONIQUE

(30) Priority: 30.12.2010 EP 10197431
(43) Date of publication of application: 06.11.2013
(73) Proprietor: Feyecon B.V., 2012 LG Haarlem (NL)
(72) Inventor: HOFLAND, Gerard Willem, NL-2355 BG Hoogmade (NL); DE VRIES, Tjerk Jan, NL-5631 JS Eindhoven (NL); STOLK, Maarten, NL-3812 CE Amersfoort (NL)
(74) Representative: Nederlandsch Octrooibureau
(86) International application number: PCT/NL2011/050909
(87) International publication number: WO 2012/091572

(56) References cited:
- EP-A1- 1 310 543
- EP-A1- 2 093 278
- WO-A1-2008/147181

## Description

### TECHNICAL FIELD OF THE INVENTION

The present invention relates to a process that employs a dry ionic liquid to dehydrate a water-containing medium, said medium being a pressurized gas having a pressure of at least 0.5 MPa, said pressurized gas being in a gaseous, liquid or supercritical state.

### BACKGROUND OF THE INVENTION

Conventional processes for the dehydration of gasses, liquids and supercritical fluids often involve absorption/adsorption of water by a liquid or solid desiccant. The desiccant should have a much higher affinity for water than for the water-carrying medium and it should have a high water-holding capacity. Furthermore, ideally the desiccant should be regenerable, inert and non-toxic. Finally, the desiccant should have a low solubility in the water-carrying medium.

Liquid desiccants offer a number of advantages over solid desiccants, including pumpability and easy handling. In addition, liquid desiccants offer the important advantage that they are ideally suited for use in continuous (multistage) processes.

EP-A 1 310 543 describes a process for the continuous drying of a hydrocarbon stream comprising contacting the hydrocarbon stream with an ionic, liquid drying agent of a salt of a fluorinated sulphonic acid. The examples of this European patent application describe the dehydration of heptane containing water using triethyl ammonium triflate.

EP-A 1 354 863 describes a process for the continuous drying of a hydrocarbon stream at a temperature being effective in drying the stream with an ionic liquid drying agent comprising a salt of sulphuric acid being in liquid or melted form at the drying temperature. The examples describe dehydration of a stream of heptane saturated with water by contacting said stream with a dry ionic sulphate (diethylmethylammonium bisulphate).

### SUMMARY OF THE INVENTION

The inventors have unexpectedly discovered that dry ionic liquid choline salts can advantageously be used as a desiccant to dehydrate a pressurized gas having a pressure of at least 0.5 MPa, said pressurized gas being in a gaseous, liquid or supercritical state.

Ionic liquid cholines salts offer the advantage that they can be regenerated very easily as they are surprisingly heat-stable. Furthermore, these liquid choline salts offer the advantage that they are non-toxic and largely inert. Thus, these ionic liquid choline salts can suitably be used to dehydrate water-containing media that are subsequently employed in the production of foodstuffs, beverages, nutritional formulations, pharmaceutical preparations etc.

### DETAILED DESCRIPTION OF THE INVENTION

Accordingly, one aspect of the invention relates to a process for dehydrating a water-containing medium, said medium being a pressurized gas in a gaseous, a liquid or a supercritical state, said pressurized gas having a pressure of at least 0.5 MPa, said process comprising:
- contacting the water-containing medium with a dry ionic liquid choline salt to dehydrate the water-containing medium; and
- separating a dehydrated medium from the hydrated ionic liquid choline salt.

The term "ionic liquid" as used herein refers to a salt in the liquid state. Ionic liquids are largely made of ions and short-lived ion pairs. These substances are variously called liquid electrolytes, ionic melts, ionic fluids, fused salts, liquid salts, or ionic glasses. Any salt that melts without decomposing or vaporizing usually yields an ionic liquid.

The term "choline salt" as used herein refers to the salt that is formed by N,N,N-trimethylethanolammonium cation with an undefined counter anion.

The dry ionic salt that is employed in the present process is liquid when it is contacted with the water-containing medium. The invention encompasses the use of salts that are an ionic liquid salt under the condition employed in the process but not under, for instance, ambient conditions.

The term "dry ionic liquid" as used herein refers to an ionic liquid that is capable of absorbing/binding water. Naturally, it is preferred to employ a dry ionic liquid having a very low water activity or relative humidity. It is noted, however, that for some ionic liquids it can be advantageous if the dry ionic liquid contains a quantity of water as these ionic liquids may become very viscous if all water is removed therefrom.

It should be understood that the present invention also encompasses the use of a mixture of the ionic liquid choline salt and another liquid or solid component, provided the choline salt is present in the mixture in the form of an ionic liquid.

The dry ionic liquid choline salt preferably has a water activity of 0.08-0.4, more preferably of 0.09-0.25, most preferably of 0.1-0.2 when it is contacted with the water-containing medium.

In the present process the water-containing medium is preferably contacted with the dry ionic liquid at a temperature and a pressure at which the solubility of water in the dry ionic liquid (in mg/kg) is at least 5 times, more preferably at least 10 times and most preferably at lest 20 times higher than the dry medium's solubility in the same dry ionic liquid (in mg/kg).

The contacting of the dry ionic liquid and the water-containing medium preferably takes place at a temperature in the range of 0-80°C, more preferably of 15-60°C, most preferably of 31-50°C.

The contacting of ionic liquid with the water-containing medium typically occurs at a pressure of at least 1 MPa, more preferably of 3-50 MPa and most preferably of 5-25 MPa.

In a preferred embodiment of the invention the water-containing medium is a liquefied gas or a supercritical fluid.

The water-containing medium preferably comprises at least 50%, more preferably at least 80% and most preferably at least 90%, by weight of the dry medium, of carbon dioxide, nitrous oxide, methane, ethane, ethylene propane, cyclopropane, propylene, butane and mixtures thereof. Even more preferably, the water-containing medium contains at least 50%, more preferably at least 80% and most preferably at least 90% of carbon dioxide, said percentages being calculated by weight of dry medium.

Preferably, in the present process the hydrated ionic liquid is continuously removed and continuously replenished with dry ionic liquid. Thus, the process enables dehydration of the water-containing medium to the desired level in a single operation.

The water-containing medium is preferably contacted with the dry ionic liquid choline salt by dispersing the ionic liquid salt throughout the water-containing medium, e.g. by spraying the ionic liquid salt into the water-containing medium. In this way, rate limiting effects of the low diffusion rates in the relatively viscous ionic liquid salt can be minimized effectively.

In accordance with another advantageous embodiment the water-containing medium is contacted with the dry ionic liquid choline salt by dispersing said medium throughout the ionic liquid.

In another preferred embodiment of the present process a stream of the water-containing medium is contacted with a stream of the dry ionic liquid in a counter current fashion.

An important advantage of the use of the ionic liquid choline salt as a dehydration agent in the present process lies in the fact that water can removed from the hydrated ionic liquid relatively easily. Thus, in a particularly preferred embodiment of the invention the process comprises drying the hydrated ionic liquid and reusing the dried ionic liquid so obtained as dry ionic liquid in the dehydration process.

The ionic liquid choline salt of the present invention offers the advantage that it is surprisingly heat stable. Thus, in a particularly preferred embodiment, the drying of the hydrated ionic liquid comprises heating said ionic liquid to a temperature in excess of 80°C, more preferably of 80-150°C and most preferably 100-130 °C.

The dry ionic liquid choline salt employed in the present process preferably is a salt of choline and a carboxylic acid. The carboxylic acid preferably is a hydroxyl substituted carboxylic acid, more preferably a 2-hydroxycarboxylic acid. Even more preferably, the carboxylic acid is selected from lactate, glycolate, α-hydroxybutyrate and combinations thereof. Most preferably, the ionic liquid choline salt is selected from choline lactate, choline glycolate and combinations thereof.

The present invention encompasses an embodiment of the present process in which the dry ionic liquid choline salt is combined with another liquid or solid desiccant (e.g zeolite).

The water-containing medium, when it is contacted with the dry ionic liquid, typically contains 0.01-10% water, more preferably 0.03-3% water and most preferably 0.1-1% water, said percentages being calculated by weight of dry medium.

In the present process the water content of the water-containing medium is typically reduced by at least a factor 3. More preferably, said water content is reduced by at least factor 7, most preferably by at least a factor 10.

The present process typically yields a dehydrated medium having a water activity of not more than 0.45. Even more preferably, the dehydrated medium has a water activity of not more than 0.35, most preferably of not more than 0.25.

In a particularly advantageous embodiment of the present invention the process comprises:
a) contacting a dehydrated medium selected from a gas, a liquid or a supercritical fluid with a water-containing material to extract water from said water-containing material into said medium, thereby producing a dehydrated material and a water-containing medium; and
b) contacting the water-containing medium with a dry ionic liquid choline salt to dehydrate the water-containing medium.

The dehydrated medium is pressurized gas having a pressure of at least 0.5 MPa, preferably of of 3-50 MPa and most preferably of 5-25 MPa.

Advantageously, this process comprise the following additional step:
c) separating the dehydrated medium from the hydrated ionic liquid and recirculating said dehydrated medium to step a).

Even more preferably, the process additionally comprises the following steps:
d) drying the hydrated ionic liquid to produce a dry ionic liquid; and
e) recirculating the dry ionic liquid to step b).

Steps a) and b) may be operated concurrently or successively. Preferably, steps a) and b) are operated concurrently. Steps a) and b), even when operated concurrently, may be executed in different compartments.

The aforementioned process is particularly suitable for drying a water-containing material that comprises intact pieces of animal, fungal or plant tissue. Preferably, the water-containing material comprises at least 50 wt.%, more preferably at least 80 wt.% and most preferably at least 90 wt.% of intact pieces of animal, fungal or plant tissue.

The dehydrated material produced in the process typically has a water content of less than 15 wt.%, more preferably of less than 10 wt.% and most preferably of less than 7 wt.%.

The invention is further illustrated by means of the following non-limiting examples.

### EXAMPLES

### Example 1

Choline lactate was introduced in a cylindrical pressure vessel having a diameter of 12 cm in sufficient quantity to form a layer of 2 cm thickness on the bottom of the vessel. Two slices of tomato (5 mm thick and 5 cm diameter) were placed in the vessel, approximately 5 cm above the surface of the ionic liquid.

Next, the vessel was pressurized with CO₂ to 100 bar and kept at a temperature of 40°C for 20 hours. The supercritical CO2 was recycled from the top of the vessel to the bottom of the vessel via a centrifugal pump (115 kg/h)

After 20 hours in the pressure vessel the weight of tomato slices had decreased by 94%. The dehydrated tomato had an a_{w} of 0.40 and the choline lactate had an a_{w} of 0.41.

### Example 2

The choline lactate that was used in Example 1 was analysed at the beginning and the end of the experiment. The analysed paramaters included: a_{w}, amount of water present, CO₂ solubility and density. The results obtained are shown in Table 1.

**Table 1**

| Choline lactate | a_{w} | water uptake | CO₂ solubility | density |
|---|---|---|---|---|
| Starting material | 0.12 | - | -- | 1.2 |
| Hydrated salt | 0.41 | 8 wt.% | 3.98 wt.% | 1.1 |
| Hydrated salt + extra water | 0.89 | 30 wt.% | 2.96 wt.% | 1.0 |

### Example 3

Choline lactate was hydrated by adding 20 g water to 30 g choline lactate. Next, the hydrated choline lactate was dried by keeping it at a temperature of 125°C or 150°C for 1 hour. It was found that that the hydrated choline lactate could be regenerated at these high temperatures with no adverse effect on the desiccating properties of the ionic liquid.

The procedure of hydrating and drying (at 125 °C) was repeated several times. No adverse effects on the desiccating properties of the ionic liquid were observed after these repeated hydration/drying cycles.

### Example 4

Choline lactate was introduced in a cylindrical pressure vessel (1L) having a diameter of 8 cm in sufficient quantity to form a layer of approximately 2.5 cm thickness on the bottom of the vessel (111.2g). One slice of tomato (5 mm thick and 5 cm diameter weighing 9.5 grams) was placed in the vessel, approximately 5 cm above the surface of the ionic liquid.

Next, the vessel was pressurized with gaseous CO₂ to 20 bar and kept at a temperature of 14°C for 18 hours.

After 18 hours in the pressure vessel the weight of the tomato slice had decreased by 20.5%. The water activity of the choline lactate increased from 0.16 a_{w} to 0.18 a_{w}.

Although the reduction in water content of the tomato slice was marginal, this experiment clearly demonstrates the capability of the ionic liquid choline lactate to remove water from the CO₂ gas. Under the conditions employed in this experiment CO₂ can absorb not more than 0.1 g of water per litre of CO₂ (at 20 bar). The amount of water removed from the tomato slice corresponds to 2 g, which is many times more than the amount of water that can be absorbed by the amount of carbon dioxide that was used in the experiment (1 1).

### Example 5

Choline lactate was introduced in a cylindrical pressure vessel (1L) having a diameter of 8 cm in sufficient quantity to form a layer of approximately 2.5 cm thickness on the bottom of the vessel (130.2gr). One slice of tomato (5 mm thick and 5 cm diameter weighing 7.5rams) was placed in the vessel, approximately 5cm above the surface of the ionic liquid.

Next, the vessel was pressurized with liquid CO₂ to 60 bar and kept at a temperature of 14°C for 12 hours.

After 12 hours in the pressure vessel the weight of tomato slices had decreased by 41.2%. The water activity of the choline lactate increased from 0.16 a_{w} to 0.21 a_{w}.

### Example 6

An apparatus comprising an extractor (1L vessel) filled with wet sponges, a packed column (packing height = 64 cm; diameter = 38 mm) and a separator (1L vessel) filled with dried zeolite was used for carrying out the experiments described below.

Supercritical carbon dioxide was saturated with water in the extractor vessel, after which the saturated CO₂ was fed to the bottom of the packed column. Within the column the CO₂ was contacted with the choline lactate (counter current). The choline lactate was sprayed on the packed column, and was removed from the bottom of the column. The CO₂ was finally fed to a vessel containing 600gr of zeolite for post-drying.

Each of the experiments was run for approximately 30 minutes. Before each experiment the packed column was cleaned and dried. The moisture uptake by the choline lactate was determined by calculating the weight loss of the sponges and the weight gain of the zeolite.

Several tests were carried out with the experimental set-up described above, using different conditions in order to assess the influence of these parameters in the absorption process.

The experimental conditions used and the results obtained are summarised in Tables 1.

**Table 1**

| | **Pressure (bar)** | **Temp. (°C)** | **CO₂ flow rate (kg/h)** | **IL flow rate (ml/min)** | **Initial a_{w} IL** | **Final a_{w} IL** |
|---|---|---|---|---|---|---|
| **1** | 100 | 40 | 15 | 4 | 0.100 | - |
| **2** | 100 | 40 | 15 | 8 | 0.111 | 0.184 |
| **3** | 150 | 40 | 15 | 4 | 0.115 | 0.275 |
| **4** | 150 | 50 | 15 | 4 | 0.115 | 0.234 |
| **5** | 100 | 40 | 15 | 4 | 0.121 | 0.221 |
| **6** | 150 | 50 | 15 | 4 | 0.117 | 0.226 |
| **7** | 100 | 40 | 15 | 4 | 0.107 | 0.201 |
| **8** | 100 | 40 | 15 | 4 | 0.042 | 0.113 |
| **9** | 100 | 40 | 15 | 4 | 0.084 | 0.167 |
| **10** | 100 | 40 | 15 | 4 | 0.136 | 0.204 |

From the experiments it is clear that the choline lactate was capable of removing moisture from the super critical CO₂ using a packed column set up. This was clear from the weight loss of the sponges, and the increase in water activity of the choline lactate.

The experiments further show that the ionic liquid can take up water at low, even very low, water activity. It is noted that as the ionic liquid takes up more water, the rate at which this water uptake causes the water activity to increase steadily decreases.

## Claims

1. A process for dehydrating a water-containing medium, said medium being a pressurized gas that is in a gaseous, a liquid or a supercritical state, said pressurized gas having a pressure of at least 0.5 MPa, said process comprising:
• contacting the water-containing medium with a dry ionic liquid choline salt to dehydrate the water-containing medium; and
• separating a dehydrated medium from the hydrated ionic liquid choline salt.

2. Process according to claim 1, wherein solubility of water in the dry ionic liquid (in mg/kg) is at least 10 times higher than the dry medium's solubility in the same dry ionic liquid (in mg/kg).

3. Process according to claim 1 or 2, wherein the process comprises drying the hydrated ionic liquid and reusing the dried ionic liquid as dry ionic liquid in the dehydration process.

4. Process according to claim 3, wherein the drying of the hydrated ionic liquid comprises heating said ionic liquid to a temperature in excess of 80°C.

5. Process according to any one of the preceding claims, wherein the dry ionic liquid is a salt of choline and a carboxylic acid.

6. Process according to any one of the preceding claims, wherein the water-containing medium, when it is contacted with the dry ionic liquid, contains 0.01-10% water, said percentage being calculated by weight of dry medium.

7. Process according to any one of the preceding claims, wherein the water-containing medium comprises at least 50% by weight of dry medium of carbon dioxide.

8. Process according to any one of the preceding claims, wherein the water-containing medium is a pressurized gas having a pressure of at least 3 MPa.

9. Process according to any one of the preceding claims, wherein the water-containing medium is a liquefied gas or a supercritical fluid.

10. Process according to any one of the preceding claims wherein the process comprises continuously removing the hydrated ionic liquid and continuously replenishing said hydrated ionic liquid with dry ionic liquid.

11. Process according to any one of the preceding claims, wherein a stream of the water-containing medium is contacted with a stream of the dry ionic liquid in a counter current fashion.

12. Process according to any one of the preceding claims, said process comprising:
a) contacting a dehydrated medium selected from a gas, a liquid or a supercritical fluid with a water-containing material to extract water from said water-containing material into said medium, thereby producing a dehydrated material and a water-containing medium; and
b) contacting the water-containing medium with a dry ionic liquid choline salt to dehydrate the water-containing medium.

13. Process according to claim 12, said process further comprising the following steps:
c) separating the dehydrated medium from the hydrated ionic liquid and recirculating said dehydrated medium to step a);
d) drying the hydrated ionic liquid to produce a dry ionic liquid; and
e) recirculating the dry ionic liquid to step b).

14. Process according to claim 12 or 13, wherein the water content of the water-containing material is reduced by at least a factor 3.

15. Process according to any one of claims 12-14, wherein the water-containing material comprises intact pieces of animal or plant tissue.

## Patentansprüche

1. Verfahren zum Dehydrieren eines Wasser enthaltenden Mediums, wobei das Mittel ein unter Druck stehendes Gas ist, welches in einem gasförmigen, einem flüssigen oder einem superkritischen Zustand ist, wobei das unter Druck stehende Gas einen Druck von zumindest 0,5MPa besitzt, wobei das Verfahren umfasst:
- Kontaktbehandlung des Wasser enthaltenden Mediums mit einem trocknen ionischen flüssigen Cholinsalz, um das Wasser enthaltende Medium zu dehydrieren, und
- Trennen des dehydrierten Mediums von dem hydrierten ionischen flüssigen Cholinsalz.

2. Verfahren nach Anspruch 1, wobei die Löslichkeit von Wasser in der trocknen ionischen Flüssigkeit (in mg/kg) zumindest zehnmal höher ist als die Löslichkeit des trocknen Mediums in derselben trocknen ionischen Flüssigkeit (in mg/kg).

3. Verfahren nach Anspruch 1 oder 2, wobei das Verfahren ein Dehydrieren der hydrierten ionischen Flüssigkeit und ein Wiederverwenden der getrockneten ionischen Flüssigkeit als trockne ionische Flüssigkeit in dem Dehydrierungsverfahren umfasst.

4. Verfahren nach Anspruch 3, wobei das Trocknen der hydrierten ionischen Flüssigkeit ein Erwärmen der ionischen Flüssigkeit auf eine Temperatur über 80°C umfasst.

5. Verfahren nach einem der vorhergehenden Ansprüche, wobei die trockne ionische Flüssigkeit ein Salz von Cholin und eine Carboxylsäure ist.

6. Verfahren nach einem der vorhergehenden Ansprüche, wobei das Wasser enthaltende Medium wenn es mit der trocknen ionischen Flüssigkeit in Kontakt gebracht wird, 0,01-10% Wasser enthält, wobei der Prozentsatz auf das Gewicht des trocknen Mediums bezogen berechnet ist.

7. Verfahren nach einem der vorhergehenden Ansprüche, wobei das Wasser enthaltende Medium zumindest 50 Gewichts% des trocknen Mediums von Kohlendioxid umfasst.

8. Verfahren nach einem der vorhergehenden Ansprüche, wobei das Wasser enthaltende Medium ein unter Druck stehendes Gas ist, welches einen Druck von zumindest 3MPa aufweist.

9. Verfahren nach einem der vorhergehenden Ansprüche, wobei das Wasser enthaltende Medium ein verflüssigtes Gas oder ein superkritisches Fluid ist.

10. Verfahren nach einem der vorhergehenden Ansprüche, wobei es ein kontinuierliches Entfernen der hydrierten ionischen Flüssigkeit und ein kontinuierliches Ergänzen der hydrierten ionischen Flüssigkeit durch trockne ionische Flüssigkeit umfasst.

11. Verfahren nach einem der vorhergehenden Ansprüche, wobei ein Strom des Wasser enthaltenden Mediums mit einem Strom der trocknen ionischen Flüssigkeit in einer Gegenstromweise in Kontakt gebracht wird.

12. Verfahren nach einem der vorhergehenden Ansprüche, umfassend:
a) Kontaktbehandlung eines dehydrierten Mediums, welches aus einem Gas, einer Flüssigkeit oder einem superkritischen Fluid ausgewählt ist, mit einem Wasser enthaltenden Material, um Wasser aus dem Wasser enthaltenden Material in das betreffende Medium zu extrahieren, um dadurch ein dehydriertes Material und ein Wasser enthaltendes Medium zu erzeugen, und
b) Kontaktbehandlung des Wasser enthaltenden Mediums mit einem trocknen ionischen flüssigen Cholinsalz, um das Wasser enthaltende Medium zu dehydrieren.

13. Verfahren nach Anspruch 12, ferner umfassend die folgenden Schritte:
c) Trennen des dehydrierten Mediums von der hydrierten ionischen Flüssigkeit und Rezirkulieren des dehydrierten Mediums zum Schritt a),
d) Trocknen der hydrierten ionischen Flüssigkeit, um eine trockne ionische Flüssigkeit zu erzeugen, und
e) Rezirkulieren der trocknen ionischen Flüssigkeit zum Schritt b).

14. Verfahren nach Anspruch 12 oder 13, wobei der Wassergehalt des Wassers enthaltenden Materials um zumindest einen Faktor 3 verringert wird.

15. Verfahren nach einem der Ansprüche 12 bis 14, wobei das Wasser enthaltende Material intakte Stücke eines Tier- oder Pflanzengewebes umfasst.

## Revendications

1. Procédé de déshydratation d'un milieu contenant de l'eau, ledit milieu étant un gaz sous pression à l'état gazeux, liquide ou supercritique, ledit gaz sous pression étant à une pression d'au moins 0,5 MPa, ledit procédé comprenant :
• la mise en contact du milieu contenant de l'eau avec un sel de choline liquide ionique anhydre pour déshydrater le milieu contenant de l'eau ; et
• la séparation d'un milieu déshydraté du sel de choline liquide ionique hydraté.

2. Procédé selon la revendication 1, dans lequel la solubilité de l'eau dans le liquide ionique anhydre (en mg/kg) est au moins 10 fois supérieure à la solubilité du milieu sec dans ce même liquide ionique anhydre (en mg/kg).

3. Procédé selon la revendication 1 ou 2, dans lequel le procédé comprend le séchage du liquide ionique hydraté et la réutilisation du liquide ionique séché en tant que liquide ionique anhydre dans le procédé de déshydratation.

4. Procédé selon la revendication 3, dans lequel le séchage du liquide ionique hydraté comprend le chauffage dudit liquide ionique à une température en excès de 80°C.

5. Procédé selon l'une quelconque des revendications précédentes, dans lequel le liquide ionique anhydre est un sel de choline et d'acide carboxylique.

6. Procédé selon l'une quelconque des revendications précédentes, dans lequel le milieu contenant de l'eau, quand il est mis en contact avec le liquide ionique anhydre, contient de 0,01 à 10% d'eau, ce pourcentage étant calculé en poids du milieu sec.

7. Procédé selon l'une quelconque des revendications précédentes, dans lequel le milieu contenant de l'eau comprend au moins 50 % en poids de milieu sec de dioxyde de carbone.

8. Procédé selon l'une quelconque des revendications précédentes, dans lequel le milieu contenant de l'eau est un gaz sous pression à une pression d'au moins 3 MPa.

9. Procédé selon l'une quelconque des revendications précédentes, dans lequel le milieu contenant de l'eau est un gaz liquéfié ou un fluide supercritique.

10. Procédé selon l'une quelconque des revendications précédentes, dans lequel le procédé comprend le retrait en continu du liquide ionique hydraté et la réalimentation en continu du liquide ionique hydraté par du liquide ionique anhydre.

11. Procédé selon l'une quelconque des revendications précédentes, dans lequel un flux du milieu contenant de l'eau est mis en contact avec un flux du liquide ionique anhydre, à contre-courant.

12. Procédé selon l'une quelconque des revendications précédentes, ledit procédé comprenant :
a) la mise en contact d'un milieu déshydraté choisi parmi un gaz, un liquide ou un fluide supercritique avec un matériau contenant de l'eau pour extraire l'eau dudit matériau contenant de l'eau vers ledit milieu, produisant ainsi un matériau déshydraté et un milieu contenant de l'eau ; et
b) la mise en contact du milieu contenant de l'eau avec un sel de choline liquide ionique anhydre pour déshydrater le milieu contenant de l'eau.

13. Procédé selon la revendication 12, ledit procédé comprenant en outre les étapes suivantes :
c) séparation du milieu déshydraté du liquide ionique hydraté et remise en circulation dudit milieu déshydraté vers l'étape a) ;
d) séchage du liquide ionique hydraté pour produire un liquide ionique anhydre ; et
e) remise en circulation du liquide ionique anhydre vers l'étape b).

14. Procédé selon la revendication 12 ou 13, dans lequel la teneur en eau du matériau contenant de l'eau est réduite d'au moins un facteur 3.

15. Procédé selon l'une quelconque des revendications 12 à 14, dans lequel le matériau contenant de l'eau comprend des morceaux intacts de tissu animal ou végétal.
